# EUROPÄISCHE PATENTANMELDUNG

(11) **EP 0 616 191 A1**
(43) Veröffentlichungstag der Anmeldung: **21.09.1994**
(21) Anmeldenummer: 94101517.4
(22) Anmeldetag: 02.02.1994
(51) Int. Cl.: G01B 7/28, G01B 7/34

(54) **Messsystem zur Erfassung von Unebenheiten auf der Oberfläche eines Messobjektes**

(30) Priorität: 13.02.1993 DE 4304451
(71) Anmelder: SEICHTER GmbH, D-30519 Hannover (DE)
(72) Erfinder: Trauernicht, Herbert, D-31319 Sehnde 2 (DE)

(57) **Zusammenfassung**

Die Erfindung bezieht sich auf ein Meßsystem zur Abtastung der Oberfläche eines Meßobjektes (7) mittels eines flächig abtastenden Distanzsensors (1). Der Sensor (1) und das Meßobjekt (7) werden relativ zueinander bewegt. Die Ausdehnung (2) der Abtastfläche des Sensors (1) in Bewegungsrichtung (10) ist größer gewählt als die kleinste Ausdehnung (8) der Struktur (9), die noch erfaßt werden soll.
Bei diesem Größenverhältnis wird die Struktur (9) nicht mehr in voller Größe wiedergegeben wird.
Um aus dieser nicht mehr korrekten Information trotzdem eine Aussage über die Ausdehnung (8) zu erhalten, wird der Anteil des Ausgangssignales des Sensors (1), der durch Struktur (9) auf der Oberfläche des Meßobjektes entsteht, über dem Weg der Bewegung integriert.

## Beschreibung

Die Erfindung bezieht sich auf ein Meßsystem zur Abtastung der Oberfläche eines Meßobjektes mittels eines Distanzsensors. Der Distanzsensor wird in einem festen Meßabstand zu der abzutastenden Oberfläche positioniert. Der Sensor und das Meßobjekt führen dann eine Relativbewegung aus. Sie werden dabei so relativ zueinander bewegt, daß das Ausgangsignal des Sensors ein Abbild der Oberfläche des Objektes ist.

Bei der Abtastung der Oberfläche von Meßobjekten haben sich flächig abtastende Distanzsensoren bewährt. Zum Beispiel werden für die Abtastung von Gummioberflächen mit Vorliebe kapazitive Meßsensoren eingesetzt. Für die Abtastung von metallischen Oberflächen eignen sich auch induktiv oder magnetisch arbeitende Sensoren.

Flächig abtastende Sensor haben den Vorteil, daß mit ihnen eine relativ breite Spur auf der Oberfläche des Meßobjektes abgetastet werden kann. Diese Eigenschaft hat allerdings den Nachteil, daß feine geometrische Strukturen auf der Oberfläche, die kleiner sind als die Abtastfläche, kaum erfaßt werden können.

Der Erfindung liegt die Aufgabe zu Grunde, ein Meßsystem mit einem flächig abtastenden Sensor so auszugestalten, daß auch relativ feine Strukturen noch gemessen werden können.

Diese Aufgabe wird durch die im Patentanspruch 1 angegebene Erfindung gelöst.

Bei dem erfindungsgemäßen Meßsystem ist die Ausdehnung der Abtastfläche in Bewegungsrichtung größer gewählt als die kleinste Ausdehnung der Struktur, die noch erfaßt werden soll. Es kann dann vorkommem, daß die Ausdehnung der vorhandenen Erhebung oder Vertiefung auf der Objektoberfläche in Bewegungsrichtung kleiner ist als die Abtastfläche. In diesem Fall gibt das Signal des Sensors die Höhe der Erhebung bzw. Vertiefung nicht mehr in voller Größe wieder. Der Sensor erfaßt die gesamte Fläche, die gerade abgetastet wird, und bildet eine gemittelte Information. Diesen Umstand macht die Erfindung sich zu Nutze.

Um aus dieser, im beschriebenen Fall nicht mehr korrekten, Information trotzdem eine Aussage über die Ausdehnung zu erhalten, wird der Anteil des Ausgangssignales des Sensors, der durch die Erhebung bzw. Vertiefung auf der Oberfläche des Meßobjektes entsteht, über dem Weg der Bewegung integriert. Das entspricht der

Ermittlung der Fläche, die von dem Signalanteil aufgespannt wird, wenn man den Kurvenverlauf des Sensorsignales betrachtet. Gemeint ist die Fläche, die zwischen dem tatsächlichen Kurvenverlauf und einem Kurvenverlauf liegt, den man ohne die Erhebung bzw. Vertiefung erhalten hätte.

Der auf diese Weise erhaltene Wert kann eventuell mit einem Faktor versehen direkt als Meßwert verwendet werden.

Gemäß einem Unteranspruch wird mit Vorteil jedoch vorher noch ein fester Betrag abgezogen. Dadurch wird folgender Effekt ausgeglichen: Ein flächenhaft abtastender Sensor gibt die Unebenheit vergrößert wieder. Es gibt im Signal einen Einlaufbereich, in dem die Unebenheit sich unter die Fläche des Sensors bewegt, einen Mittelbereich, in dem die Erhebung sich voll unter der Sensorfläche befindet und einen Auslaufbereich, in dem die Unebenheit wieder verlassen wird.

Die Verwendung einer relativ großen Abtastfläche bei dem erfindungsgemäßen Meßsystem hat den Vorteil, daß mit einem relativ großen Meßabstand gemessen werden kann. Der maximale Meßabstand ist direkt abhängig von der Größe der Abtastfläche.

Die Ausdehnung einer Unebenheiten in Bewegungsrichtung kann in der gleichen Größe liegen wie der Wert, um den die Unebenheit aus der Ebene herausragt (Höhe der Unebenheit). Trotzdem besteht wegen des großen Meßabstandes nicht die Gefahr, daß der Sensor mit der Oberfläche des Objektes kollidiert.

Mit Vorteil wird das Meßsystem angewandt, wenn mehrere Eigenschaften der Unebenheit konstant sind und nur eine einzige Eigenschaft noch zu ermitteln ist. Zur Verdeutlichung dient folgendes Beispiel:
Beim Aufbau von Reifen werden Gummilagen, die z.B. ein Gewebe im Inneren enthalten, auf einer Reifen-Aufbau-Trommel aufgewickelt. Die Gummilage wird von einer Vorratsrolle entnommen auf der Trommel zu einer endlosen Lage zusammengefügt. An der Nahtstelle wird eine Überlappung vorgesehen, damit die Nahtstelle sicher genug ist. Diese Überlappung stellt eine stegförmige Unebenheit auf der Oberfläche der Trommel dar. Die aufgebrachte Gummilage hat eine konstante Dicke. Die Höhe der Überlappung (Unebenheit) ist dadurch unveränderlich. Es ist nun wichtig, daß der Grad der Überlappung überwacht wird. Bei zu geringer Überlappung ist der fertige Reifen an dieser Stelle geschwächt und bei zu großer Überlappung ist er zu stabil. Der erste Fall führt zu der bekannten Erscheinung "Beulen" und der zweite zu "Einschnürungen" auf der Oberfläche des aufgeblasenen Reifens. Besonders der erste Fall stellt ein Sicherheitsrisiko dar.

Ein in einem Abstand zu der Trommeloberfläche positionierter flächenhaft abtastender Sensor gibt bei sich drehender Trommel ein Signal ab. Da die Überlappungsbreite in Bewegungsrichtung im wesentlichen die einzige veränderliche Größe ist, kann das Signal in der erfindungsgemäßen Weise zur Messung dieser Größe herangezogen werden.

Die Erfindung wird im folgenden anhand der Zeichnungen erläutert.

Es zeigen
- Fig. 1: ein Beispiel einer Unebenheit, die mit dem Meßsystem erfaßt werden soll,
- Fig. 2: Ausgangssignale eines kapazitiven Sensors,
- Fig. 3: Meßergebnisse bei verschieden großen Unebenheiten und
- Fig. 4: eine Veranschaulichung der in dem Meßsystem vorgenommenen Schritte.

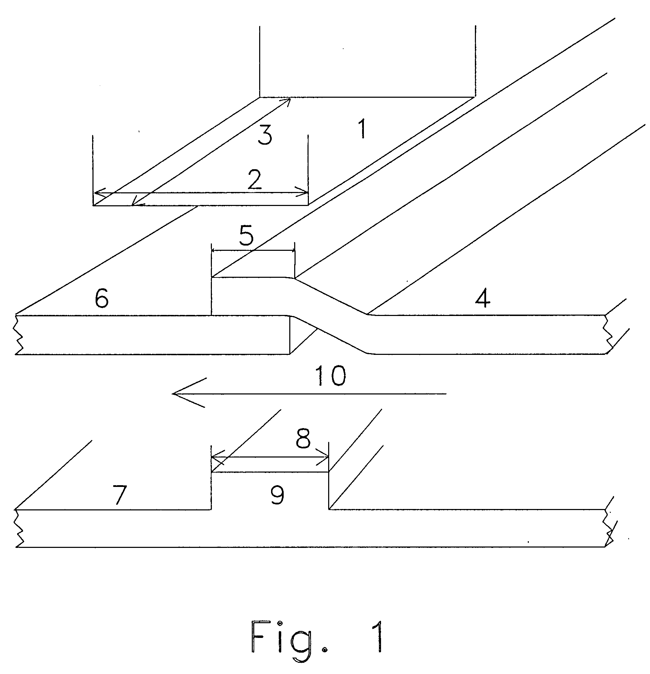

In Figur 1 ist in der Mitte die Nahtstelle einer Gummilage dargestellt. Die Gummilage ist aus Stücken 4 und 6 mit Hilfe einer Überlappung zusammengesetzt. Die Gummilage hat eine konstante Dicke. Durch die Überlappung bildet sich eine stegförmige Erhebung, die sich über die ganze Breite der Gummilage erstreckt. Es soll die Breite der Überlappung, die durch einen Maßpfeil 5 gekennzeichnet ist, mit dem Meßsystem gemessen werden. Oberhalb der Gummilage ist ein flächenhaft abtastender Distanzsensor 1 in einem festem Abstand zu der Gummilage 4,6 positioniert. Die Abtastfläche ist durch Pfeile 2 und 3 gekennzeichnet. Die Gummilage ist z. B. auf einer Reifenaufbautrommel aufgewickelt. Die Trommel wird während der Messung gedreht, so daß die Gummilage sich in Richtung des Pfeiles 10 unter dem feststehenden Sensor 1 bewegt. Die Oberfläche der Gummilage wird dabei mit einer Spurbreite, die durch den Pfeil 3 vorgegeben ist, abgetastet. Die Ausdehnung der Abtastfläche 2, 3 in Bewegungsrichtung (Pfeil 2) ist im Beispiel größer ausgelegt als die Ausdehnung 5 der Überlappung, die noch erfaßt werden soll.

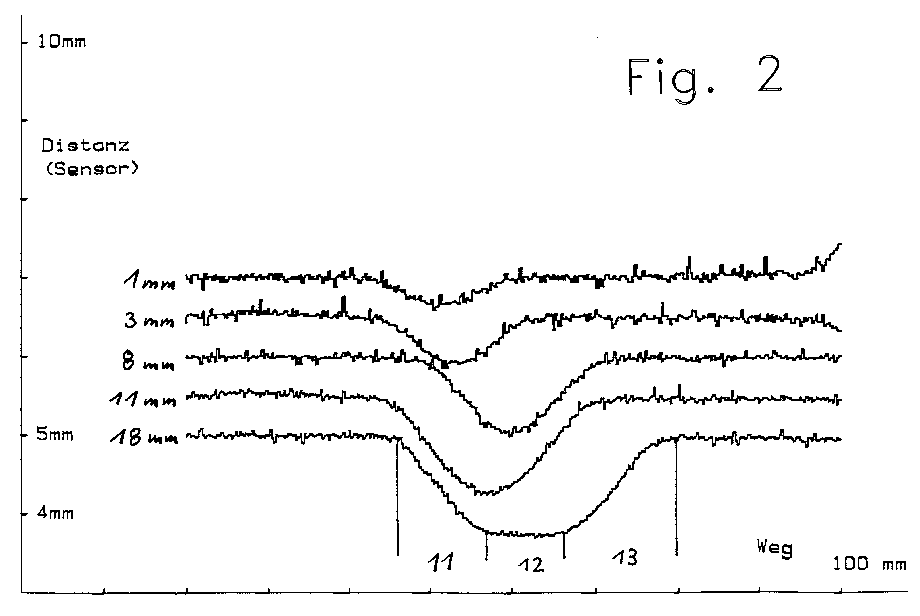

In Figur 1 unten ist ein Anwendungsfall dargestellt, bei dem eine Aluminiumplatte 7 eine stegförmige Erhebung 9 der Breite 8 trägt. Die längliche Erhebung ist im Querschnitt rechteckförmig. Von diesem vereinfachten Modell wird bei der Betrachtung der Figur 2 ausgegangen.

In Figur 2 sind Signale dargestellt, die mit einem kapazitiven Sensor mit einer Abtastfläche von 10x23 mm aufgenommen worden sind. Die Ausdehnung der Abtastfläche in Bewegungsrichtung beträgt 10 mm. Es handelt sich um fünf Aufnahmen, die nacheinander gemacht wurden. Die Aufnahmen wurden mit unterschiedlichen Meßabständen durchgeführt, damit die Kurven nicht übereinander liegen. Sie sind dadurch optisch gut unterscheidbar. Bei den fünf Aufnahmen wurden Stege mit unterschiedlicher Breite unter dem Sensor vorbeibewegt. Der Weg der Bewegung ist auf der waagerechten X-Achse aufgetragen und der von dem Sensor erfaßte Abstand auf der Y-Achse. Die Stegbreite, die der Kurve jeweils zugeordnet ist, ist links neben der Kurve wiedergegeben. Die Stege haben alle die gleiche Höhe von 1 mm. Es ist zu erkennen, daß die Höhe der Stege bei der Stegbreite 11 mm und 18 mm noch korrekt wiedergegeben wird. Dagegen wird sie bei kleineren Stegbreiten (8 mm, 3 mm und 1 mm) nicht mehr richtig erfaßt. Weiter ist zu erkennen, daß der Sensor den Steg vergrößert wiedergibt. Bei der Stegbreite 18 mm ist z.B. zu sehen, daß es einen Einlaufbereich 11 gibt, in dem der Steg sich unter die Fläche des Sensors bewegt, einen Mittelbereich 12, in dem die Erhebung sich voll unter der Sensorfläche befindet, und einen Auslaufbereich 13, in dem die Unebenheit wieder verlassen wird. Der Steg von 18 mm Breite wird in dem Signal mit einer Breite von mehr als 30 mm wiedergegeben.

Es besteht nun die Aufgabe, aus diesen Signalen die Breite des Steges in Bewegungsrichtung abzulesen. Dies bereitet Schwierigkeiten, insbesondere weil die Höhe der Stege verfälscht ist. Der Erfindung liegt nun die Erkenntnis zugrunde, daß die Breite des Steges am besten durch die Fläche wiedergegeben ist, die von dem Signalanteil umschlossen wird, welche von dem Steg verursacht ist.

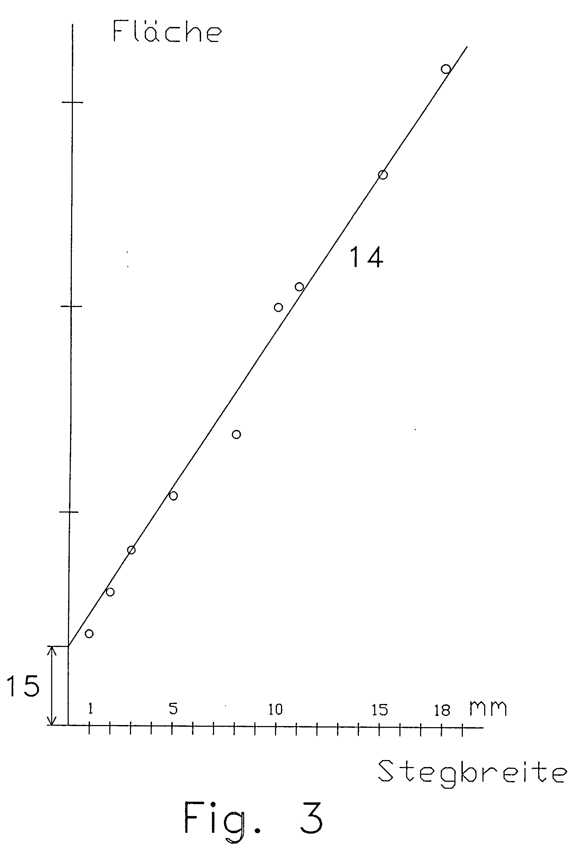

In Figur 3 ist die Fläche über der Stegbreite aufgetragen. Es ist zu erkennen, daß die Fläche sich im wesentlichen linear mit der Stegbreite verändert. Zur Verdeutlichung wurde eine Gerade 14 durch die einzelnen Meßpunkte gezeichnet. Die Gerade 14 geht nicht durch den Nullpunkt. Es kann deshalb sinnvoll sein, von dem ermittelten Flächenwert einen festen Wert 15 zu subtrahieren, bevor der Wert zur Ermittlung der Stegbreite verwendet wird.

Die Flächenermittlung entspricht einer Integration der von der Unebenheit herrührenden Signalanteile über dem Weg der Bewegung. Zur Gewinnung der Flächeninformation sind z. B. analoge Integrierschaltungen geeignet.

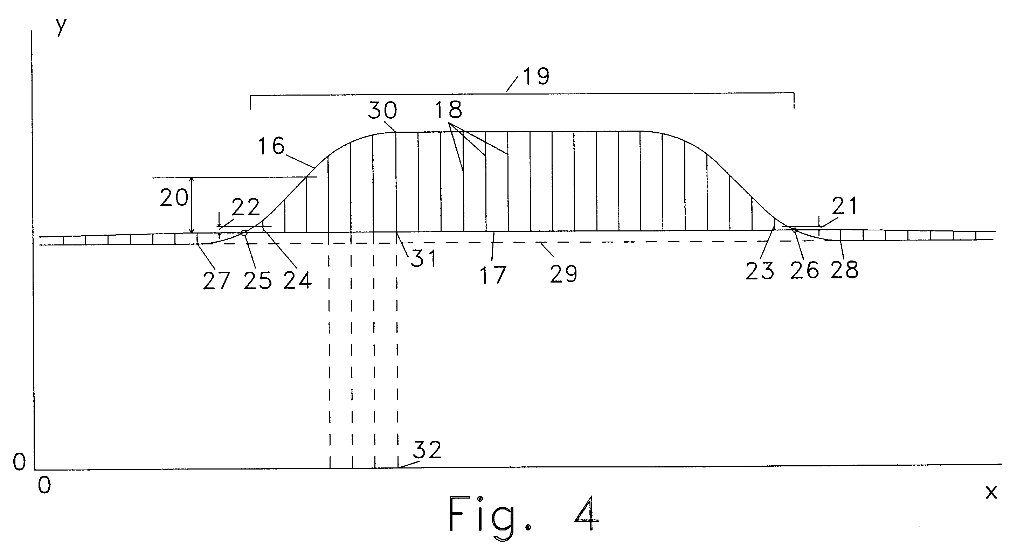

Im folgenden wird anhand von Figur 4 ein Verfahren beschrieben, bei dem dem Ausgangssignal des Sensors diskrete Werte entnommen werden. Diese werden in einem Microcomputer weiterverarbeitet. Die Abtastung des Analogsignales 16 des Distanzsensors erfolgt in einem Zeitraster, das an den Linien 18 erkennbar ist.

Es wird eine Bezugslinie 17 in den Signalverlauf gelegt. Diese Bezugslinie 17 kann z.B. als langfristiger Mittelwert des Signales 16 gebildet werden, indem z. B. 128 benachbarte Abtastwerte aufsummiert werden und die Summe wieder durch 128 geteilt wird.

Weiter wird dann die Differenz zwischen dem aktuellen Abtastwert auf der Linie 16 und dem aktuellen Punkt auf der Bezugslinie 17 gebildet, so daß man die durch die senkrechten Linien 18 wiedergegebenen Werte erhält. Ein Beispiel für diese Differenzbildung ist eingezeichnet: Die Strecke zwischen den Punkten 30 und 32 minus der Strecke 31 - 32 ergibt die Strecke 30 - 31.

Die auf diese Weise erhaltenen Differenzwerte 18 unter dem Signalverlauf werden in einem Bereich, der durch die Klammer 19 gekennzeichnet ist, aufsummiert.

Der so erhaltene Summenwert, der der Fläche unter dem Signal entspricht, dient als Maß für die Stegbreite (8 in Fig. 1).

Da kleine Unebenheiten auf der Oberfläche immer vorhanden sind, ist es erwünscht, die Summenbildung erst bei einer vorgegebenen Triggerschwelle beginnen zu lassen.

Diese Triggerung wird durch folgendes Verfahren erreicht: Die durch die senkrechten Linien 18 in Figur 4 wiedergegebenen Werte werden zwischengespeichert. Wenn der aktuelle Wert eine erste, durch einen Pfeil 20 wiedergegebene Triggerschwelle überschreitet, wird das Meßsystem in einen ersten Triggerzustand geschaltet. Dieser Zustand besagt, daß die Summenbildung bevorsteht, aber zu diesem Zeitpunkt noch nicht eingeleitet werden soll. Zu diesem Zeitpunkt liegen die für die Summenbildung erforderlichen Werte ja noch in der Zukunft. Dieser Triggerzustand wird solange beibehalten, bis eine zweite Triggerschwelle 21 unterschritten wird. Jetzt wird die Summenbildung eingeleitet, und zwar werden die durch die senkrechten Linien 18 dargestellten Werte aus dem Speicher entnommen und zu einer Summe aufaddiert. Die Summenbildung beginnt mit dem Wert 23. Als zweiter Wert wird der links daneben dargestellte Wert hizuaddiert und so weiter. Die Summenbildung wird beendet, sobald die aus dem Speicher entnommene Differenz eine dritte Triggerschwelle 22 unterschreitet. Der letzte in die Summe aufgenommene Wert ist somit der Wert 24.

Die Bezugslinie 17 kann auch durch andere Verfahren von dem Signal 16 abgeleitet werden. Es ist dafür zu sorgen, daß die Bezugslinie 17 kurzfristigen Signaländerungen des Signales 16 nicht in einem Maße folgt, daß die zu erfassenden Signalanteile ausgeglichen werden.

Die Ermittlung der Fläche mit Hilfe der unmittelbar von dem Signal 16 abgeleiteten Bezugslinie 17 enthält eine Ungenauigkeit. Exakt richtig wäre es eine in Figur 4 gestrichelt eingezeichnete Bezugslinie 29 zu verwenden. Diese ist schwierig unmittelbar von dem Signal 16 abzuleiten. Sie kann jedoch folgendermaßen gebildet werden: In der Nähe der Schnittpunkte 25 und 26 der Signallinie 16 mit der Bezugslinie 17 wird in einem Betrachtungsfenster, das sich z.B. 5 Abtastwerte in beiden Richtungen vom Schnittpunkt aus erstreckt, das Minimum im Signalverlauf des Signales 16 ermittelt. Auf diese Weise werden die Punkte 27 und 28 gefunden, zwischen denen man eine als Bezugslinie 29 dienende Gerade ziehen kann. Wenn man diese Bezugslinie 29 als Basis für die Berechnung der Fläche verwendet, erfaßt man genau die Signalanteile, die von der zu messenden Unebenheit verursacht sind.

Das Raster für die Abtastung des Signales des Distanzsensors wird mit Vorteil von einem Inkrementalgeber erzeugt, der mit der Bewegung des Meßobjektes mechanisch gekoppelt ist und Impulse abgibt.

## Patentansprüche

1. Meßsystem zur Messung von Unebenheiten (9), insbesondere Erhebungen und/oder Vertiefungen, auf der Oberfläche eines Meßobjektes (7) mit einem flächig abtastenden Distanzsensor (1), z.B. einem kapazitiven Sensor, der der Oberfläche des Objektes (7) gegenüber angeordnet ist, wobei der Distanzsensor (1) und die Oberfläche des Objektes (7) eine Relativbewegung zueinander ausführen,
dadurch gekennzeichnet,
- daß die Ausdehnung (2) der Abtastfläche (2,3) des Distanzsensors (1) in Bewegungsrichtung (10) größer ausgelegt ist als die kleinste Ausdehnung (8) der Unebenheit (9), die noch erfaßt werden soll,
- daß in der Auswerteeinrichtung Mittel vorgesehen sind zur Aufsummierung der von der Unebenheit verursachten Signalanteile (18) über den Signalverlauf (16) und
- daß von der Summe die Ausdehnung (8) der Unebenheit (9) in Bewegungsrichtung (10) abgeleitet wird.

2. Meßsystem nach Anspruch 1, dadurch gekennzeichnet,
- daß in der Auswerteeinrichtung eine Bezugslinie (17) des Signales (16) gebildet wird,
- daß die Differenz (18) zwischen dem aktuellen Signalwert (16) und der Bezugslinie (17) gebildet wird,
- daß die Differenzen (18) aufsummiert werden und
- daß von der Summe ein Wert für die Ausdehnung (8) der Unebenheit (9) abgeleitet wird.

3. Meßsystem nach Anspruch 2, dadurch gekennzeichnet, daß von der Summe ein fester Wert (15) subtrahiert wird und daß das Ergebnis als Maß für die Ausdehnung (8) der Unebenheit (9) verwendet wird.

4. Meßsystem nach Anspruch 3, dadurch gekennzeichnet, daß das Ergebnis der Subtraktion mit einem Faktor multipliziert wird und
daß das erhaltene Ergebnis direkt als Maß für die Ausdehnung (8) der Unebenheit (9) verwendet wird.

5. Meßsystem nach Anspruch 2 oder 3, dadurch gekennzeichnet, daß die Summenbildung erst bei Überschreitung einer vorgegebenen Trigger-Schwelle (20) der Differenz (18) eingeleitet wird.

6. Meßsystem nach Anspruch 5, dadurch gekennzeichnet, daß eine zweistufige Triggerung vorgesehen ist, wobei in der ersten Stufe bei Überschreitung einer vorgegebenen Schwelle (20) der Differenz die Summenbildung als erforderlich erkannt wird und in der zweiten Stufe bei Unterschreitung einer zweiten vorgegebenen Schwelle (21) die Summenbildung über die vorangehenden Differenzen (18) eingeleitet wird.

7. Meßsystem nach Anspruch 6, dadurch gekennzeichnet, daß die Summenbildung nach Durchlauf beider Triggerstufen so weit im Signalverlauf (16) zurück durchgeführt wird, bis eine dritte vorgegebene Schwelle (22) von der Differenz (18) unterschritten wird.

8. Meßsystem nach Anspruch 1 oder einem oder mehreren der vorhergehenden Ansprüche, dadurch gekennzeichnet, daß dem Signal (16) des Distanzsensors (1) in einem von der Bewegung abgeleiteten Raster Signalproben entnommen werden und daß Mittel vorgesehen sind zur Speicherung der Signalproben.

9. Meßsystem nach Anspruch 8, dadurch gekennzeichnet, daß das Raster durch einen Inkrementalgeber vorgegeben ist, der mit der Bewegung gekoppelt ist.
